# EUROPÄISCHE PATENTSCHRIFT

(11) **EP 1 810 145 B1**
(45) Veröffentlichungstag und Bekanntmachung des Hinweises auf die Patenterteilung: **03.09.2008**
(21) Anmeldenummer: 05797084.0
(22) Anmeldetag: 25.10.2005
(51) Int. Cl.: G06F 11/16

(54) **VERFAHREN UND VORRICHTUNG ZUR SYNCHRONISIERUNG IN EINEM MEHRPROZESSORSYSTEM**
METHOD AND DEVICE FOR SYNCHRONISING IN A MULTI-PROCESSOR SYSTEM
PROCEDE ET DISPOSITIF DE SYNCHRONISATION DANS UN SYSTEME MULTIPROCESSEUR

(30) Priorität: 25.10.2004 DE 102004051952; 25.10.2004 DE 102004051964; 25.10.2004 DE 102004051950; 25.10.2004 DE 102004051937; 25.10.2004 DE 102004051992
(43) Veröffentlichungstag der Anmeldung: 25.07.2007
(73) Patentinhaber: ROBERT BOSCH GMBH, 70442 Stuttgart (DE)
(72) Erfinder: KOTTKE, Thomas, 71139 Ehningen (DE)
(86) Internationale Anmeldenummer: PCT/EP2005/055537
(87) Internationale Veröffentlichungsnummer: WO 2006/045800

(56) Entgegenhaltungen:
- WO-A-20/05003962
- DE-A1- 4 104 114
- DE-B- 1 269 827
- US-B1- 6 519 710
- US-B1- 6 615 366
- KANEKAWA N ET AL: "Fault detection and recovery coverage improvement by clock synchronized duplicated systems with optimal time diversity" FAULT-TOLERANT COMPUTING, 1998. DIGEST OF PAPERS. TWENTY-EIGHTH ANNUAL INTERNATIONAL SYMPOSIUM ON MUNICH, GERMANY 23-25 JUNE 1998, LOS ALAMITOS, CA, USA,IEEE COMPUT. SOC, US, 23. Juni 1998 (1998-06-23), Seiten 196-200, XP010291315 ISBN: 0-8186-8470-4

## Beschreibung

### Stand der Technik

In technischen Anwendungen, wie insbesondere im Kraftfahrzeug oder im Industriegüterbereich also z.B. Maschinenbereich und in der Automatisierung werden ständig mehr und mehr mikroprozessor- oder rechnerbasierte Steuerungs- und Regelungssysteme für sicherheitskritische Anwendungen eingesetzt. Dabei sind Zweirechnersysteme oder Zweiprozessorsysteme (Dual Cores) heutzutage gängige Rechnersysteme für sicherheitskritische Anwendungen, insbesondere im Fahrzeug wie beispielsweise für Antiblockiersysteme, das Elektronische Stabilitätsprogramm (ESP), X-by-Wire-Systeme wie Drive-by-Wire oder Steer-by-Wire sowie Break-by-Wire, usw. oder auch bei sonstigen vernetzten Systemen. Um diese hohen Sicherheitsansprüche in zukünftigen Anwendungen zu befriedigen, sind mächtige Fehlermechanismen und Fehlerbehandlungsmechanismen erforderlich, insbesondere um transienten Fehler, die beispielsweise bei Verkleinerung der Halbleiterstrukturen der Rechnersysteme entstehen, zu begegnen. Dabei ist es relativ schwierig den Core selbst, also den Prozessor zu schützen. Eine Lösung hierfür ist wie erwähnt die Verwendung eines Zweirechnersystems oder Dual Core-Systems zur Fehlerdetektion.

Solche Prozessoreinheiten mit wenigstens zwei integrierten Ausführungseinheiten sind somit als Dual-Core- oder Multi-Core-Architekturen bekannt. Solche Dual-Core- oder Multi-Core-Architekturen werden nach heutigem Stand der Technik hauptsächlich aus zwei Gründen vorgeschlagen:
Zum Einen kann damit eine Leistungssteigerung, also eine Performance-Steigerung erreicht werden, indem die beiden Ausführungseinheiten oder Cores als zwei Rechenein-heiten auf einem Halbleiterbaustein betrachtet und behandelt werden. In dieser Konfiguration bearbeiten die zwei Ausführungseinheiten oder Cores unterschiedliche Programme respektive Tasks. Dadurch lässt sich eine Leistungssteigerung erzielen, weshalb diese Konfiguration als Leistungsmodus oder Performance-Mode bezeichne wird.

Der zweite Grund, eine Dual-Core- oder Multi-Core-Architektur zu realisieren, ist eine Sicherheitssteigerung, indem die beiden Ausführungseinheiten redundant das gleiche Programm abarbeiten. Die Ergebnisse der beiden Ausführungseinheiten oder CPUs, also Cores werden verglichen und ein Fehler kann bei dem Vergleich auf Übereinstimmung erkannt werden. Im Folgenden wird diese Konfiguration als Sicherheitsmodus oder Safety-Mode oder auch Fehtererkennungsmodus bezeichnet. Heutzutage gibt es somit einerseits Zwei- oder Mehrprozessorsysteme die zur Erkennung von Hardware-Fehlern redundant arbeiten (siehe Dual-Core oder Master-Checker-Systeme) und anderseits Zweioder Mehrprozessorsysteme, die auf ihren Prozessoren unterschiedliche Daten abarbeiten. Rechnersysteme mit mehreren Prozessoren sind bereits aus der US 6615366, der DE 1269827 und der DE 4104114 bekannt.

Kombiniert man nun diese beiden Betriebsarten in einem Zwei- oder Mehrprozessorsystem (der Einfachheit halber wird nun nur noch von einem Zweiprozessorsystem gesprochen, die nachfolgende Erfindung ist aber genauso auf Mehrprozessorsystemen anwendbar), so müssen die beiden Prozessoren im Performance-Modus unterschiedliche Daten erhalten und im Fehlererkennungsmodus die gleichen Daten.

Die Aufgabe der Erfindung ist nun ein Mehrprozessorsystem gemäß Anspruch 16 und eine Verfahren gemäß Anspruch 1 vorzustellen, die den wenigstens beiden Prozessoren oder Cores abhängig vom Modus die Instruktionen/ Daten redundant oder unterschiedlich liefern und insbesondere im Performance-Modus die Speicherzugriffsrechte aufteiln und die Synchronisation und/oder Desynchronisation der beiden Prozessoren oder Cores bei einem Moduswechsel ermöglichen. Erfindungsgemäß wird eine besonders einfache Desynchronisation der Prozessoren vorgeschlagen.

Solch eine Einheit ist bis jetzt noch nicht bekannt. Sie ermöglicht den effektiven Betrieb eines Zweiprozessorsystems, so dass in den beiden Modi Sicherheit und Performance im Betrieb umgeschaltet werden kann. Dabei wird im weiteren von Prozessoren gesprochen, was aber ebenso Cores bzw. Recheneinheiten begrifflich einschließt.

Weiterhin ist es Aufgabe der Erfindung eine Möglichkeit anzugeben mit der eine Synchronisierung des Mehrprozessorsystems erfolgen kann. Bis jetzt ist noch kein solches Verfahren, bzw. eine Implementierung bekannt. Es gibt Multiprozessorsysteme die nur einen von beiden Modi können, aber keines, dass taktsynchron arbeitet, umschaltbar ist und die Daten taktgenau vergleichen kann. Die Synchronsation kann taktgenau und taktsynchron durch das vorgestellte Verfahren erfolgen, es kann aber auch Anwendungen geben, bei denen solch eine genaue Synchronisation nicht erforderlich ist. Dann kann dieses Verfahren auch angewandt werden um eine "lose" Synchronisation zu erreichen. Eine lose Synchronisation ist eine Synchronisation bei der die beiden Prozessoren zwar das gleiche abarbeiten, der zeitliche Abstand der Abarbeitung jedoch in einem durch den Vergleicher vorgegebenen Rahmen schwanken kann.

### Kurze Beschreibung der Zeichnungen

Fig. 1: Zweirechnersystem mit Taktversatz.
Fig. 2: Beispielhafte Implementieung der Datenverteilungseinheit (DVE).
Fig. 3: Modeswitch Funktionsweise.

### Beschreibung der Ausführungsbeispiele und Vorteile der Erfindung

In einem Zweirechnersystem gibt es 2 Prozessoren die dieselben oder verschiedene Aufgaben abarbeiten können. Diese beiden Prozessoren des Zweirechnersystems können diese Aufgaben taktsynchron oder taktversetzt abarbeiten.

Um diese Umschaltung in einem taktsynchronen System, bei dem die Ausgangsdaten taktsynchron verglichen werden sollen, zwischen den beiden Modi zu ermöglichen, müssen diese beide Prozessoren synchronisierbar sein. D.h., dass wenn der Prozessor vom Performance Modus (=Modus, in dem sie verschiedene Aufgaben abarbeiten und die Ausgangsdaten nicht verglichen werden) in einen sicheren Modus (=Modus, in dem die beiden Prozessoren die gleiche Aufgabe abarbeiten und deren Ausgaben in jedem Takt verglichen werden) wechselt, müssen die beiden Prozessoren im Programmablauf synchronisiert werden können.

So zeigt die Erfindung auch ein Verfahren und eine Vorrichtung bei der der Umschaltwunsch durch ein Signal ausgelöst wird,. Dies kann z.B. durch das Beobachten des Befehlsbusses erzeugt werden (schauen ob der Umschaltwunsch ausgeführt wird) oder ein Steuersignal des Decoders sein (z.B. Auslösen eines Interrupts, Schreiben in ein Register, ... bei dem anderen Prozessor) und der Prozessor dadurch an die vorgegeben Programmadresse springt.

Daneben können zweckmäßiger Weise die beiden Prozessoren aufgrund einer Kennung, also ID, die für jeden Prozessor in dem Mehrprozessorsystem einzigartig ist, an verschiedene Programmstellen springen und somit desychronisiert werden (wichtig: Prozessoridentifikation durch ein ProzessorID-Bit, bedingter Sprung, Auslesen des ProzessorId-Bit aus einem für jeden Prozessor separaten Speicherbereich aber mit gleicher Adresse, ProzessorId-Bit abgelegt in internem Prozessorregister).

Die Erfindung offenbart ein Verfahren und eine Vorrichtung zur Synchronisierung in einem Mehrprozessorsystem mit wenigstens zwei Prozessoren, wobei Umschaltmittel enthalten sind durch welche zwischen wenigstens zwei Betriebsmodi umgeschalten werden kann, wobei die Vorrichtung derart ausgestaltet sind, dass eine Synchronisierung durch ein Anhaltesignal durchgeführt wird, welches einen vorauseilenden Prozessor anhält um diesen mit dem wenigstens zweiten Prozessor zu synchronisieren.

Zweckmäßig kann die Synchronisation durch Mitteilung eines Umschaltwunsches wenigstens eines Prozessors erfolgen (z.B. Auslösen eines Interrupts, Schreiben in ein Register, ... bei dem anderen Prozessor) und der Prozessor dadurch an eine vorgegeben Programmadresse springen.

Die Erfindung zeigt auch eine Einheit zur Datenverteilung aus wenigstens einer Datenquelle in einem System mit wenigstens zwei Recheneinheiten, wobei Umschaltmittel (ModeSwitch) enthalten sind durch welche zwischen wenigstens zwei Betriebsmodi des Systems umgeschalten werden kann, wobei die Einheit derart ausgestaltet ist, dass die Datenverteilung und/oder die Datenquelle (insbesondere Instr.Speicher, Datenspeicher, Cache) abhängig von dem Betriebsmodus ist. Gleichermaßen ist ein System mit einer solchen Einheit gezeigt.

Dabei entspricht der erste Betriebsmodus einem Sicherheitsmodus, bei dem die zwei Recheneinheiten gleiche Programme und/oder Daten abarbeiten und Vergleichsmittel vorgesehen sind, welche die bei der Abarbeitung der gleichen Programme entstehenden Zustände auf Übereinstimmung vergleichen

Die erfindungsgemäße Einheit bzw. das erfindungsgemäße Verfahren ermöglicht die Implementierung der beiden Modi in einem Zweiprozessorsystem.

Arbeiten die beiden Prozessoren im Fehlererkennungsmodus (F-Modus), so erhalten die beiden Prozessoren die gleichen Daten/Instruktionen und arbeiten sie im Performancemodus (P-Modus), so kann jeder Prozessor auf den Speicher zugreifen. Dann verwaltet diese Einheit die Zugriffe auf den nur einfach vorhandenen Speicher oder Peripherie.

Im F-Modus übernimmt die Einheit die Daten/Adressen eines Prozessors (hier Master genannt) und leitet diese an die Komponenten wie Speicher, Bus, usw. weiter. Der zweite Prozessor (hier Slave) möchte den gleichen Zugriff machen. Die Datenverteilungseinheit nimmt dies an einem zweiten Port entgegen, aber leitet die Anfrage nicht an die weiteren Komponenten weiter. Die Datenverteilungseinheit übergibt dem Slave die gleichen Daten wie dem Master und vergleicht die Daten der beiden Prozessoren. Sind diese unterschiedlich, so zeigt dies die Datenverteilungseinheit (hier DVE) durch ein Fehlersignal an. Es arbeitet somit nur der Master auf den Bus/Speicher und der Slave bekommt die selben Daten (Funktionsweise wie bei einem Dual-Core System).

Im P-Modus arbeiten die beiden Prozessoren unterschiedliche Programmteile ab. Die Speicherzugriffe sind somit auch unterschiedlich. Die DVE nimmt somit die Anforderung der Prozessoren entgegen und gibt die Ergebnisse/angeforderte Daten an den Prozessor zurück, der sie angefordert hat. Möchten nun beide Prozessoren gleichzeitig auf eine Komponenten zugreifen, so wird ein Prozessor in einen Wartezustand versetzt, bis der andere bedient wurde.

Die Umschaltung zwischen den beiden Modi und somit der unterschiedlichen Arbeitsweise der Datenverteilungseinheit erfolgt durch ein Steuersignal. Dies kann entweder von einem der beiden Prozessoren generiert werden oder extern.

Wird das Zweiprozessorsystem im F-Modus mit einem Taktversatz betrieben und im P-Modus nicht, so verzögert die DVE-Einheit die Daten für den Slave entsprechend, bzw. speichert die Ausgangsdaten des Master solange, bis sie mit den Ausgangsdaten des Slave zur Fehlererkennung verglichen werden können.

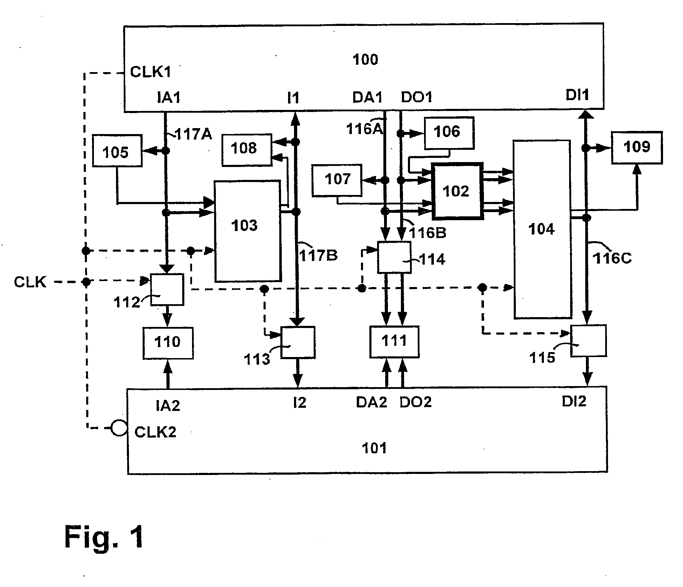

### Der Taktversatz wird anhand der Figur 1 näher erläutert:

Figur 1 zeigt ein Zweirechnersystem mit einem ersten Rechner 100, insbesondere einem Masterrechner und einem zweiten Rechner 101, insbesondere einem Slave-Rechner. Das gesamte System wird dabei mit einem vorgebbaren Takt bzw. in vorgebbaren Taktzyklen (clock cycle) CLK betrieben. Über den Takteingang CLK1 des Rechners 100 sowie über den Takteingang CLK2 des Rechners 101 wird diesem der Takt zugeführt. Bei diesem Zweirechnersystem ist darüber hinaus beispielhaft ein spezielles Merkmal zur Fehlererkennung enthalten, in dem nämlich der erste Rechner 100 sowie der zweite Rechner 101 mit einem Zeitversatz, insbesondere einem vorgebbaren Zeitversatz bzw. einem vorgebbaren Taktversatz arbeiten. Dabei ist jede beliebige Zeit für einen Zeitversatz vorgebbar und auch jeder beliebige Takt bezüglich eines Versatzes der Taktzyklen. Dies kann ein ganzzahliger Versatz des Taktzyklus (clock cycle) sein, aber eben auch wie in diesem Beispiel dargestellt, beispielsweise ein Versatz von 1,5 Taktzyklen, wobei hier der erste Rechner 100 eben 1,5 Taktzyklen vor dem zweiten Rechner 101 arbeitet respektive betrieben wird. Durch diesen Versatz kann vermieden werden, dass Gleichtaktfehler, sogenannte common mode failures, die Rechner oder Prozessoren, also die Cores des Dual Cores Systems, gleichartig stören und damit unerkannt bleiben. D.h. solche Gleichtaktfehler betreffen durch den Versatz die Rechner zu unterschiedlichen Zeitpunkten im Programmablauf und bewirken demnach unterschiedliche Effekte bezüglich der beiden Rechner wodurch Fehler erkennbar werden. Gleichartige Fehlerwirkungen ohne Taktversatz wären u.U. in einem Vergleich nicht erkennbar, dies wird dadurch vermieden. Um diesen Versatz bezüglich der Zeit oder des Taktes, hier insbesondere 1,5 Taktzyklen im Zweirechnersystem zum implementieren sind die Versatzbausteine 112 bis 115 implementiert.

Um die genannten Gleichtaktfehler zu erkennen ist dieses System eben beispielsweise dazu ausgelegt in einem vorgegebenen Zeitversatz oder Taktzyklenversatz zu arbeiten, insbesondere hier 1,5 Taktzyklen, d.h. während der eine Rechner, z. B. Rechner 100 direkt die Komponenten, insbesondere die externen Komponenten 103 und 104 anspricht, arbeitet der zweite Rechner 101 mit einer Verzögerung von genau 1,5 Taktzyklen dazu. Um in diesem Fall die gewünschte Eineinhalbzyklusverzögerung, also von 1,5 Taktzyklen zu erzeugen wird Rechner 101 mit der invertierten Clock, also dem invertierten Takt am Takteingang CLK2 gespeist. Dadurch müssen aber auch die vorgenannten Anschlüsse des Rechners also seine Daten bzw. Befehle über die Busse um die genannten Taktzyklen, also hier insbesondere 1,5 Taktzyklen verzögert werden, wozu eben wie gesagt die Versatz- oder Verzögerungsbausteine 112 bis 115 vorgesehen sind.

Neben den beiden Rechnern oder Prozessoren 100 und 101 sind Komponenten 103 und 104 vorgesehen, die über Busse 116, bestehend aus den Busleitungen 116A und 116B und 116C sowie 117, bestehend aus den Busleitungen 117A und 117B mit den beiden Rechnern 100 und 101 in Verbindung stehen. 117 ist dabei ein Befehlsbus, bei welchem mit 117A ein Befehlsadressbus und mit 117B der Teil-Befehls(daten)bus bezeichnet ist. Der Adressbus 117A ist über einen Befehlsadressanschluss IA1 (Instruction Adress 1) mit Rechner 100 und über einen Befehlsadressanschluss IA2 (Instruction Adress 2) mit Rechner 101 verbunden. Die Befehle selbst werden über den Teil-Befehlsbus 117B übertragen, der über einen Befehlsanschluss I1 (Instruction 1) mit Rechner 100 und über einen Befehlsanschluss I2 (Instruction 2) mit Rechner 101 verbunden ist. In diesem Befehlsbus 117 bestehend aus 117A und 117B ist eine Komponente 103 z. B. ein Befehlsspeicher, insbesondere ein sicherer Befehlsspeicher oder dergleichen zwischengeschaltet. Auch diese Komponente, insbesondere als Befehlsspeicher wird in diesem Beispiel mit dem Takt CLK betrieben. Daneben ist mit 116 ein Datenbus dargestellt, welcher einen Datenadressbus oder eine Datenadressleitung 116A und einen Datenbus oder eine Datenleitung 116B enthält. Dabei ist 116A, also die Datenadressleitung, über einen Datenadressanschluss DA1 (Data Adress 1) mit dem Rechner 100 und über einen Datenadressanschluss DA2 (Data Adress 2) mit Rechner 101 verbunden. Ebenso ist der Datenbus oder die Datenleitung 116B über einen Datenanschluss DO1 (Data Out 1) und einen Datenanschluss DO2 (Data Out 2) mit Rechner 100 bzw. Rechner 101 verbunden. Weiterhin zu Datenbus 116 gehört die Datenbusleitung 116C, welche über einen Datenanschluss DI1 (Data In 1) und einen Datenanschluss DI2 (Data In 2) jeweils mit Rechner 100 bzw. Rechner 101 verbunden ist. In diesem Datenbus 116 bestehend aus den Leitungen 116A, 116B und 116C ist eine Komponente 104 zwischengeschaltet, beispielsweise ein Datenspeicher, insbesondere ein sicherer Datenspeicher o. ä . Auch diese Komponente 104 wird in diesem Beispiel mit dem Takt CLK versorgt.

Dabei stehen die Komponenten 103 und 104 stellvertretend für beliebige Komponenten die über einen Datenbus und/oder Befehlsbus mit den Rechnern des Zweirechnersystems verbunden sind und entsprechend der Zugriffe über Daten und/oder Befehle des Zweirechnersystems bezüglich Schreiboperationen und/oder Leseoperationen fehlerhafte Daten und/oder Befehle erhalten oder abgeben können. Zur Fehlervermeidung sind zwar Fehlerkennungsgeneratoren 105, 106 und 107 vorgesehen welche eine Fehlerkennung erzeugen wie beispielsweise ein Parity-Bit oder auch einen anderen Fehlercode wie beispielsweise einen Error- Correction-Code, also ECC, o. ä.. Dazu vorgesehen sind dann auch die entsprechenden Fehlerkennungsprüfeinrichtungen oder Check-Einrichtungen 108 und 109 zur Überprüfung der jeweiligen Fehlerkennung also beispielsweise des Parity-Bit oder eines anderen Fehlercodes wie ECC.

Der Vergleich der Daten und/oder Befehle bezüglich der redundanten Ausführung im Zweirechnersystem erfolgt in den Vergleichern oder Komparatoren 110 und 111 wie in Figur 1 dargestellt. Existiert nun aber ein Zeitversatz, insbesondere ein Takt- oder Taktzyklusversatz zwischen den Rechnern 100 und 101, entweder hervorgerufen durch ein nichtsynchrones Zweiprozessorsystem oder bei einem synchronen Zweiprozessorsystem durch Fehler in der Synchronisierung oder auch wie in diesem speziellen Beispiel durch einen zur Fehlererkennung gewünschten Zeit- bzw. Taktzyklusversatz, insbesondere hier von 1,5 Taktzyklen, so kann in diesem Zeit- oder Taktversatz ein Rechner hier insbesondere Rechner 100 fehlerhafte Daten und/oder Befehle in Komponenten, insbesondere externe Komponenten wie z. B. hier insbesondere die Speicher 103 oder 104, aber auch bezüglich anderen Teilnehmern oder Aktuatoren oder Sensoren schreiben oder lesen. So kann er auch in fehlerhafter Weise einen Schreibzugriff anstatt eines vorgesehenen Lesezugriffs durch diesen Taktversatz durchführen. Diese Szenarien führen selbstverständlich zu Fehlern im gesamten System, insbesondere ohne klare Anzeigemöglichkeit welche Daten und/oder Befehle gerade fehlerhaft geändert wurden, wodurch auch die Recovery-Problematik entsteht.

Um diese Problematik zu lösen wird nun eine Verzögerungseinheit 102 wie dargestellt in die Leitungen des Datenbusses und/oder in den Befehlsbus geschaltet. Aus Gründen der Übersichtlichkeit ist nur die Einschaltung in den Datenbus dargestellt. Bezüglich des Befehlsbusses ist dies natürlich genauso möglich und denkbar. Diese Verzögerungseinheit 102 oder die Delay Unit verzögert die Zugriffe, hier insbesondere die Speicherzugriffe so, dass ein möglicher Zeit- oder Taktversatz kompensiert wird, insbesondere bei einer Fehlererkennung beispielsweise über die Komparatoren 110 und 111 z.B. mindestens solange, bis das Fehlersignal im Zweirechnersystem erzeugt ist, also die Fehlererkennung im Zweirechnersystem durchgeführt ist. Dabei können verschiedene Varianten implementiert sein:
Verzögerung der Schreib- und Leseoperationen, Verzögerung nur der Schreiboperationen oder auch, wenn auch nicht bevorzugt, eine Verzögerung der Leseoperationen. Dabei kann durch ein Änderungssignal, insbesondere das Fehlersignal, eine verzögerte Schreiboperation in eine Leseoperation gewandelt werden um fehlerhaftes Schreiben zu unterbinden.

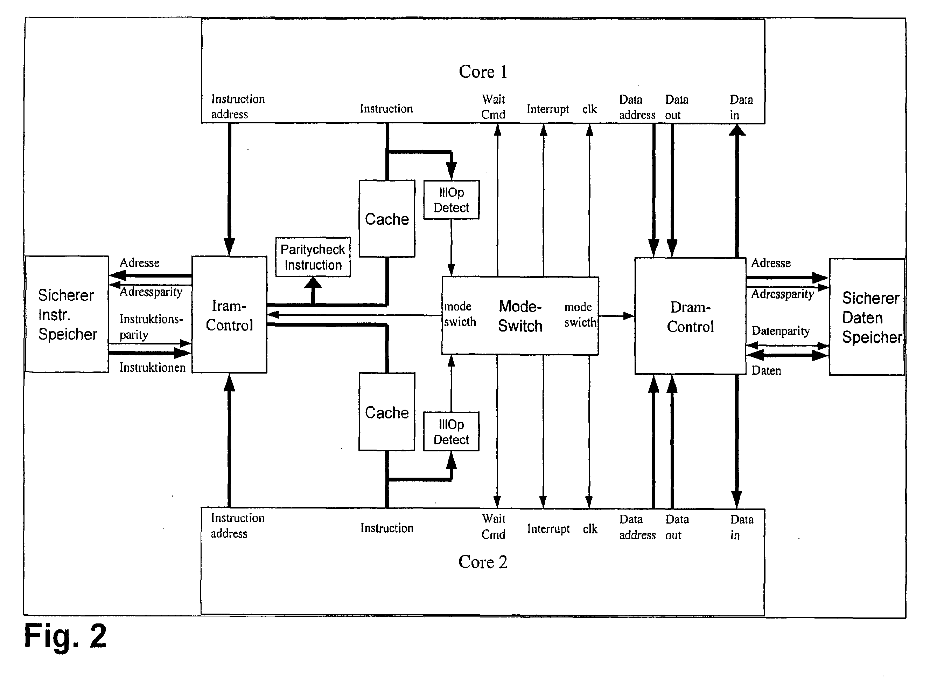

Nachfolgend anhand Figur 2 nun eine beispielhafte Implementierung bezüglich der Datenverteilungseinheit (DVE), die sich vorzugsweise aus einer Vorrichtung zur Detektierung des Umschaltwunsches (durch IIIOPDetect), der Mode-Switch-Einheit sowie dem Iram- und Dram-Control-Baustein zusammensetzt:
IllOpDetect: Die Umschaltung zwischen den beiden Modi wird durch die Einheiten "'Switch-Detect"' erkannt. Diese Einheit liegt zwischen dem Cache und dem Prozessor auf dem Instruktionsbus und schaut ob der Befehl IllOp in den Prozessor geladen wird. Wird der Befehl detektiert, so wird dieses Ereignis der Modeswitch Einheit mitgeteilt. Die "'Switch-Detect"' Einheit ist für jeden Prozessor einzeln vorhanden. Die Einheit "'Switch-Detect"' muss nicht fehlertolerant ausgerührt sein, da sie doppelt und somit redundant vorhanden ist. Andererseits ist es denkbar diese Einheit fehlertolerant und damit singulär auszuführen, bevorzugt ist aber die redundante Ausführung.

ModeSwitch: Die Umschaltung zwischen den beiden Modi wird durch die "'Switch-Detect"' Einheit getriggert. Soll eine Umschaltung vom Lock in den Split Modus erfolgen, detektieren beide "'Switch-Detect"' Einheiten die Umschaltung, da beide Prozessoren den gleichen Programmcode im Lock Modus abarbeiten. Die "'Switch-Detect"' Einheit des Prozessor 1 erkennt dies 1,5 Takte vor der "'Switch-Detect"' Einheit des Prozessors 2. Die "'Modeswitch"' Einheit hält mit Hilfe des Wait Signals den Prozessor 1 um 2 Takte an. Der Prozessor 2 wird 1,5 Takte später ebenfalls angehalten, aber nur um einen halben Takt, damit er zum Systemtakt synchronisiert wird. Anschließend wird das Status-Signal auf Split geschaltet für die weiteren Komponenten und die beiden Prozessoren arbeiten weiter. Damit die beiden Prozessoren nun unterschiedliche Tasks ausführen, müssen sie im Programmcode auseinanderlaufen. Dies erfolgt, indem direkt nach Umschalten in den Split-Modus ein Lesezugriff auf die Prozessor-ID erfolgt. Diese ausgelesene Prozessor-ID ist für jeden der beiden Prozessoren unterschiedlich. Wird nun auf eine Soll-Prozessor-ID verglichen, kann anschließend mit einem Conditional Jump Befehl der entsprechende Prozessor an eine andere Programmstelle gebracht werden. Bei einer Umschaltung vom Split-Modus in den Lock-Modus wird dies ein Prozessor bemerken, bzw. einer der beiden zuerst. Dieser Prozessor wird Programmcode ausführen, in dem der Umschaltbefehl enthalten ist. Dies wird nun durch die "'Switch-Detect'" Einheit registriert und teilt dies der Modeswitch Einheit mit. Diese hält den entsprechenden Prozessor an und teilt dem zweiten den Wunsch der Synchronisation durch einen Interrupt mit. Der zweite Prozessor erhält einen Interrupt und kann nun eine Softwareroutine zur Beendigung seines Tasks ausführen. Nun springt er ebenfalls an die Programmstelle, in der sich der Befehl zur Umschaltung befindet. Seine "'Switch-Detect'" Einheit signalisiert nun ebenfalls den Wunsch zum Moduswechsel an die Modeswitch Einheit. Zur nächsten steigenden Systemtaktflanke wird nun das Wait Signal für den Prozessor 1 deaktiviert und 1,5 Takte später für den Prozessor 2. Nun arbeiten beide wieder mit einem Taktversatz von 1,5 Takten synchron.

Befindet sich das System im Lock Modus, so müssen beide "'Switch-Detect'" Einheiten der Modeswitch Einheit mitteilen, dass sie in den Split Modus wollen. Erfolgt der Umschaltwunsch nur von einer Einheit, so wird der Fehler von den Vergleichseinheiten erkannt, da diese von einem der beiden Prozessoren weiterhin Daten geliefert bekommen und diese nicht mit dem angehaltenen Prozessoren übereinstimmen.

Sind die beiden Prozessoren im Split Modus und einer schaltet nicht zurück in den Lock-Modus, so kann dies durch einen externen Watchdog erkannt werden. Bei einem Triggersignal für jeden Prozessor bemerkt der Watchdog dass der wartende Prozessor sich nicht mehr meldet. Ist nur ein Watchdogsignal für das Prozessorsystem vorhanden, so darf die Triggerung des Watchdogs nur im Lock-Modus erfolgen. Somit würde der Watchdog erkennen, dass die Modusumschaltung nicht erfolgte. Das Modussignal liegt als Dual-Rail Signal vor. Dabei steht "'10"' für den Lock-Modus und "'01"' für den Split-Modus. Bei "'00"' und "'11'" sind Fehler aufgetreten.

IramControl: Der Zugriff auf den Befehlsspeicher der beiden Prozessoren wird über die IRAM Control gesteuert. Diese muss sicher ausgelegt sein, da sie ein Single Point of Failure ist. Sie besteht aus zwei Zustandsautomaten für jeden Prozessor, also je einen taktsynchronen iram1clkreset und einen asynchronen readiram1. Im sicherheitskritischen Modus überwachen sich die Zustandsautomaten der beiden Prozessoren gegenseitig und im Performancemodus arbeiten sie getrennt.

Das Nachladen der beiden Caches der Prozessoren werden durch 2 Zustandsautomaten gesteuert. Einem synchronen Zustandsautomaten iramclkreset und einem asynchronen readiram. Durch diese beiden Zustandsautoamten werden auch die Speicherzugriffe im Split-Modus verteilt. Hierbei hat Prozessor 1 die höhere Priorität. Nach einem Zugrif auf den Hauptspeicher durch Prozessor 1 bekommt nun -- wenn beide Prozessoren wieder auf den Hauptspeicher zugreifen wollen -- Prozessor2 die Speicherzugriffserlaubnis zugeteilt. Diese beiden Zustandsautomaten sind für jeden Prozessor implementiert. Im Lock-Modus werden die Ausgangssignale der Automaten verglichen um auftretende Fehler erkennen zu können.

Die Daten zum Aktualisieren des Cache 2 im Lock-Modus werden in der IRAM-Control Einheit um 1,5 Takte verzögert.

In Bit 5 im Register 0 der SysControl wird codiert um welchen Core es sich handelt. Core 1 ist das Bit 0 und bei Core 2 ist es High. Dieses Register ist in den Speicherbereich mit der Adresse 65528 gespiegelt.

Bei einem Speicherzugriff von Core 2 wird erst überprüft in welchem Modus sich der Rechner befindet. Ist er im Lock-Modus so wird sein Speicherzugriff unterdrückt. Dieses Signal liegt als Common-Rail Signal vor, da es sicherheitskritisch ist.

Der Programmcounter des Prozessors 1 wird um 1,5 Takte verzögert um im Lock-Modus mit dem Programmcounter des Prozessors 2 verglichen werden zu können.

Im Split Modus können die Caches der beiden Prozessoren unterschiedlich nachgeladen werden. Wenn nun in den Lock-Modus umgeschaltet wird, sind die beiden Caches nicht kohärent zueinander. Dadurch können die beiden Prozessoren auseinanderlaufen und die Vergleicher signalisieren folglich einen Fehler. Um dies zu vermeiden, ist in der IRAM Control eine Flag Tabelle aufgebaut. In dieser wird vermerkt, ob eine Cachezeile im Lock- oder im Split-Modus geschrieben wurde. Im Lock-Modus wird der für die Cachezeile entsprechende Eintrag bei einer Cachezeilennachladung auf 0 gesetzt und im Split-Modus -- auch bei einer Cacheaktualisierung der Cachezeile von nur einem Cacheauf 1. Führt der Prozessor nun im Lock-Modus einen Speicherzugriff aus, so wird überprüft, ob diese Cachezeile im Lock-Modus aktualisiert wurde, d.h. in beiden Caches gleich ist. Im
Split-Modus kann der Prozessor immer auf die Cachezeile zugreifen, unabhängig wie der Flag_Vector ist. Diese Tabelle muss nur einmal vorhanden sein, da bei einem Fehler die beiden Prozessoren auseinanderlaufen und somit an den Vergleichern dieser Fehler sicher erkannt wird. Da die Zugriffszeiten auf der zentralen Tabelle relativ hoch sind, kann diese Tabelle auch zu jedem Cache kopiert werden.

DramControl: In dieser Komponente werden für die Adress-, Daten- und Speichersteuersignale von jedem Prozessor das Parity gebildet.

Es gibt einen Prozess für beide Prozessoren zum Sperren des Speichers. Dieser Prozess muss nicht sicher implementiert sein, da im Lock-Modus fehlerhafte Speicherzugriffe durch die Vergleicher erkannt werden und im Split-Modus keine sicherheitsrelevanten Anwendungen ausgeführt werden. Hierin wird überprüft, ob der Prozessor den Speicher für den anderen Prozessor sperren möchte. Dieses Sperren des Datenspeichers erfolgt durch einen Zugriff auf die Speicheradresse $FBFF$=64511. Dieses Signal soll genau ein Takt lang anliegen, auch wenn am Prozessor zum Zeitpunkt des Aufrufens ein waitcommand anliegt. Der Zustandsautomat zur Verwaltung der Datenspeicherzugriffe besteht aus 2 Hauptzuständen:
- Prozessorstatus Lock: Die beiden Prozessoren arbeiten im Lock-Modus. D.h. die Funktionalität des Datenspeicherlocking ist nicht notwendig. Prozessor 1 koordiniert die Speicherzugriffe.
- Prozessorstatus Split: Nun ist eine Zugriffskonfliktauflösung auf den Datenspeicher nötig, und ein Speichersperren muss erfolgen können.

Der Zustand im Split-Modus ist wiederum in 7 Zustände untergliedert, die die Zugriffskonflikte auflösen und den
Datenspeicher für jeweils den anderen Prozessor sperren können. Bei gleichzeitigem Wunsch der beiden Prozessoren bei einem Zugriff, stellt die aufgeführte Reihenfolge gleichzeitig die Priorisierung dar.
- Core1\_Lock: Prozessor 1 hat den Datenspeicher gesperrt. Möchte in diesem Zustand Prozessor 2 auf den Speicher zugreifen, so wird er durch ein Wartesignal angehalten, bis Prozessor 1 den Datenspeicher wieder freigibt. \
- Core2\_Lock: Ist der gleiche Zustand wie der vorige nur dass nun Prozessor 2 den Datenspeicher gesperrt hat und Prozessor 1 bei Datenspeicheroperationen angehalten wird.
- lock1\_wait: Der Datenspeicher war durch den Prozessor 2 gesperrt als Prozessor 1 ihn ebenfalls für sich reservieren wollte. Prozessor 1 ist somit für die nächste Speichersperrung vorgemerkt.
- nex: Das gleiche für Prozessor 2. Der Datenspeicher war während des Sperrversuchs durch Prozessor 1 gesperrt. Prozessor 2 bekommt den Speicher vorreserviert. Bei normalen Speicherzugriff ohne Sperren kann hier Prozessor 2 vor Prozessor 1 zugreifen wenn davor Prozessor 1 dran war.
- Speicherzugriff von Prozessor 1: Der Speicher ist in diesem Fall nicht gesperrt. Prozessor 1 darf auf den Datenspeicher zugreifen. Falls er ihn sperren möchte, kann er dies in diesem Zustand vornehmen.
- Speicherzugriff durch Prozessor 2. Im selben Takt wollte Prozessor 1 nicht auf den Speicher zugreifen somit ist der Speicher frei für den Prozessor 2.
- kein Prozessor möchte auf den Datenspeicher zugreifen

Die DVE setzt sich wie erwähnt zusammen aus der Detektierung des Umschaltwunsches (IllOPDetect) der ModeSwitch-Einheit und der Iram- und DramControl.

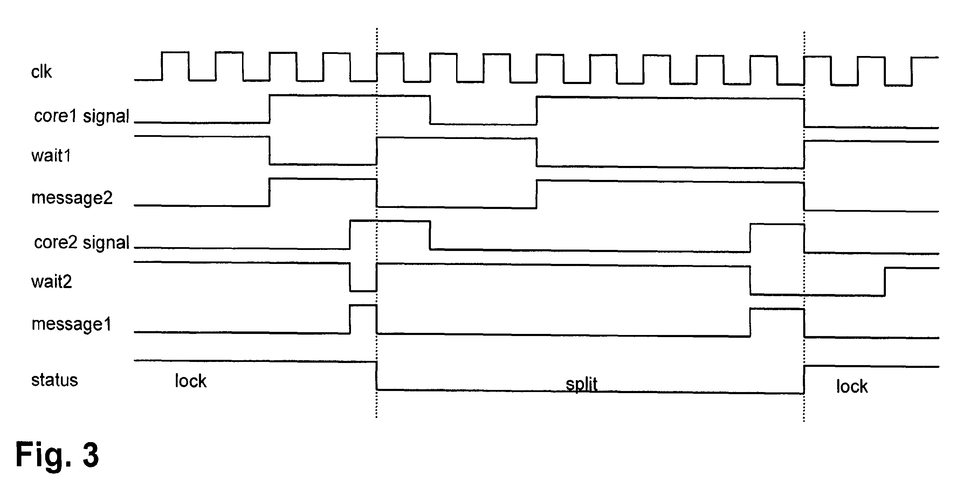

### Die Mode-Switch Funktionsweise wird nachfolgend anhand Figur 3 nochmals erläutert:

Die Umschaltung der beiden Prozessoren wird hier beispielhaft durch den Befehl IllOp im Programm getriggert. Eine Voraussetzung ist, dass jeder Prozessor eindeutig identifiziert werden kann. Hierzu wird jedem Prozessor eine Ziffer zugeordnet. Hier in diesem Bsp. ist ein Core die 1 und der andere die 0. Dies ist im Prozessorstatusregister codiert.

Die beiden Prozessoren werden hier zur Synchronisation durch das Wait-Kommando angehalten. Ebenso kann der Takt für den Prozessor, der angehalten werden soll, solange gestoppt werden (durch z.B. eine OR-Verknüpfung mit o zum anhalten und 1 zum weitertakten).

**"Switch-Detect" Einheit:** Die Umschaltung zwischen den beiden Modi wird durch die Einheiten "Switch-Detect"' erkannt. Diese Einheit liegt zwischen dem Cache und dem Prozessor auf dem Instruktionsbus und schaut, ob der Befehl IllOp in den Prozessor geladen wird. Wird der Befehl detektiert, so wird dieses Ereignis der Modeswitch Einheit mitgeteilt. Diese Erkennen wird durch das "Core 1-Signal" oder "Core 2-Signal" (siehe Bild2) der "Mode-Switch" Einheit mitgeteilt. Die "Switch-Detect" Einheit ist für jeden Prozessor einzeln vorhanden. Die Einheit "Switch-Detect" muss nicht fehlertolerant ausgeführt sein, da sie doppelt und somit redundant vorhanden ist.

**"Mode-Switch" Einheit:** Die Umschaltung zwischen den beiden Modi wird durch die "Switch-Detect" Einheit getriggert. Soll eine Umschaltung vom Lock in den Split Modus erfolgen, detektieren beide "Switch-Detect" Einheiten die Umschaltung, da beide Prozessoren den gleichen Programmcode im Lock Modus abarbeiten. Die "Switch-Detect" Einheit des Prozessor 1 erkennt dies 1,5 Takte vor der "Switch-Detect" Einheit des Prozessors 2. Die "Modeswitch" Einheit hält mit Hilfe des Wait Signals den Prozessor 1 um 2 Takte an. Der Prozessor 2 wird 1,5 Takte später ebenfalls angehalten, aber nur um einen halben Takt, damit er zum Systemtakt synchronisiert wird. Anschließend wird das Status-Signal auf Split geschaltet für die weiteren Komponenten und die beiden Prozessoren arbeiten weiter. Damit die beiden Prozessoren nun unterschiedliche Tasks ausführen, müssen sie im Programmcode auseinanderlaufen. Dies erfolgt, indem direkt nach Umschalten in den Split-Modus ein Lesezugriff auf die Prozessor-ID erfolgt. Diese ausgelesene Prozessor-ID ist für jeden der beiden Prozessoren unterschiedlich. Wird nun auf eine Soll-Prozessor-ID verglichen, kann anschließend mit einem Conditional Jump Befehl der entsprechende Prozessor an eine andere Programmstelle gebracht werden. Ein Beispiel für eine Trennung der beiden Prozessoren sieht folgendermaßen aus:
Bei dem Splitvorgang wird zuerst die Adresse des Statusregisters in dem die Prozessor-ID abgelegt ist in r1 geschrieben
   LDL r1,248
   LDH r1,255
   anschließend Trennung der beiden Prozessoren durch IllOp-Befehl
   error
   Inhalt Statusregister von Adresse r1 in r2 laden LDW r2,r1
Bit an 5.Stelle des Statusregisters testen. Wenn es 0 ist, dann ist es Prozessor 1, bei 1 handelt es sich um Prozessor 2
   BTEST r2,5
durch einen bedingten Sprung wird nun Prozessor 2 an eine andere Programmstelle gebracht
   JMPI_CT 10

Bei einer Umschaltung vom Split-Modus in den Lock-Modus wird dies ein Prozessor bemerken, bzw. einer der beiden zuerst. Dieser Prozessor wird Programmcode ausführen, in dem der Umschaltbefehl enthalten ist. Dies wird nun durch die "Switch-Detect" Enheit registriert und teilt dies der "Mode-Switch" Einheit mit. Diese hält den entsprechenden Prozessor an und teilt dem zweiten den Wunsch der Synchronisation durch einen Interrupt ("Message 1" oder "Message 2" in Bild 2) mit. Der zweite Prozessor erhält einen Interrupt und kann nun eine Softwareroutine zur Beendigung seines Tasks ausführen. Nun springt er ebenfalls an die Programmstelle, in der sich der Befehl zur Umschaltung befindet. Seine "Switch-Detect" Einheit signalisiert nun ebenfalls den Wunsch zum Moduswechsel an die Modeswitch Einheit. Zur nächsten steigenden Systemtaktflanke wird nun das Wait Signal für den Prozessor 1 deaktiviert und 1,5 Takte später für den Prozessor 2. Nun arbeiten beide wieder mit einem Taktversatz von 1,5 Takten synchron.

Befinden sich das System im Lock Modus, so müssen beide "Switch-Detect" Einheiten der Modeswitch Einheit mitteilen, dass sie in den Split Modus wollen. Erfolgt der Umschaltwunsch nur von einer Einheit, so wird der Fehler von den Vergleichseinheiten erkannt, da diese von einem der beiden Prozessoren weiterhin Daten geliefert bekommen und diese nicht mit dem angehaltenen Prozssoren übereinstimmen.

Sind die beiden Prozessoren im Split Modus und einer schaltet nicht zurück in den Lock-Modus, so kann dies durch einen externen Watchdog erkannt werden. Bei einem Triggersignal für jeden Prozessor bemerkt der Watchdog dass der wartende Prozessor sich nicht mehr meldet. Ist nur ein Watchdogsignal für das Prozessorsystem vorhanden, so darf die Triggerung des Watchdogs nur im Lock-Modus erfolgen. Somit würde der Watchdog erkennen, dass die Modusumschaltung nicht erfolgte. Das Modussignal liegt als Dual-Rail Signal vor (in Bild 2 wird es Status genannt). Dabei steht "10" für den Lock-Modus und "01" für den Split-Modus. Bei "00" und "11" sind Fehler aufgetreten.

Da der Befehl zur Umschaltung am Anfang der Pipeline des Prozessors detektiert wird, darf in den Pipelinestufen nach der Detektierung keine Sprünge vorhanden sein. Die einfachste Methode dies zu verhindern ist vor dem Befehl IllOp zwei NOp einzuführen.

Der Kern der Erfindung ist wie oben ausgeführt die generelle Funktionsweise des Mode-Switch Verfahren (je nach Modus unterschiedliche Datenzuteilung und somit auch Auswahl des Betriebsmodus) und dabei speziell die Synchronisierung der Prozessoren.

Daneben löst aber auch die dargestellte spezielle Implementierung die Eingangs genannten Aufgaben.

## Patentansprüche

1. Verfahren zur Synchronisierung und Desynchronisierung in einem Mehrprozessorsystem mit wenigstens zwei Prozessoren, wobei Umschaltmittel enthalten sind durch welche zwischen wenigstens zwei Betriebsmodi umgeschaltet werden kann, wobei in einem ersten Betriebsmodus, in dem die Processoren redundant die gleichen Programme abarbeiten die wenigstens zwei Prozessor-ren synchronisiert sind und in einem zweiten Betriebsmodus die wenigstens zwei Prozessoren unterschriedliche Tasks ausführen und desynchronisiert sind, **dadurch gekennzeichnet, dass** für den Übergang vom synchronisierten zum desychronisierten Betriebsmodus zur Desynchronisierung die beiden Prozessoren aufgrund einer Kennung (ID), die für jeden Prozessor in dem Mehrprozessorsystem einzigartig ist, an verschiedene Programmstellen springen und somit desychronisiert werden.

2. Verfahren nach Anspruch 1, **dadurch gekennzeichnet, dass** eine Synchronisation durch einen Synchronisationswunsch ausgelöst wird, wobei der Synchronisationswunsch von einem oder mehreren Prozessoren erfolgen kann, und wobei die Synchronisierung durch ein Anhaltesignal durchgeführt wird, welches einen vorauseilenden Prozessor anhält um diesen mit dem wenigstens zweiten Prozessor zu synchronisieren.

3. Verfahren nach Anspruch 2, **dadurch gekennzeichnet, dass** als Anhaltesignal das Wait-Signal eines Prozessors verwendet wird.

4. Verfahren nach Anspruch 2, **dadurch gekennzeichnet, dass** als Anhaltesignal ein Interrupt-Signal ausgelöst wird.

5. Verfahren nach Anspruch 2, **dadurch gekennzeichnet, dass** der Prozessor für die Synchronisation durch ein Auslassen von Taktzyklen angehalten wird.

6. Verfahren nach Anspruch 2, **dadurch gekennzeichnet, dass** der Prozessor für die Synchronisation durch ein Abschalten eines Taktsignales angehalten wird.

7. Verfahren nach Anspruch 1, **dadurch gekennzeichnet, dass** die Umschaltung durch einen Umschaltwunsch dargestellt wird und der Umschaltwunsch durch ein Signal ausgelöst wird.

8. Verfahren nach Anspruch 1, **dadurch gekennzeichnet, dass** die Umschaltung durch einen Umschaltwunsch dargestellt wird, wobei die Umschaltung erst erfolgt, wenn der Umschaltwunsch von zwei oder mehreren Prozessoren gefordert wird.

9. Verfahren nach Anspruch 1, **dadurch gekennzeichnet, dass** die Umschaltung durch einen Umschaltwunsch ausgelöst wird, wobei nach einem Umschaltwunsch der Betriebsmodus des Mehrprozessorsystems gewechselt wird und der Umschaltwunsch durch ein Signal angezeigt wird.

10. Verfahren nach Anspruch 1, **dadurch gekennzeichnet, dass** der vorliegende Betriebsmodus durch ein Modussignal angezeigt wird.

11. Verfahren nach Anspruch 10, **dadurch gekennzeichnet, dass,** das Modussignal als codiertes Signal, insbesondere als Dual-Rail-Signal, vorliegt.

12. Verfahren nach Anspruch 10, **dadurch gekennzeichnet, dass** das Modussignal redundant erzeugt wird, insbesondere durch zwei Zustandsautomaten oder durch eine Dual-Rail-Logik.

13. Verfahren nach Anspruch 1, **dadurch gekennzeichnet, dass** ein Synchronisationswunsch an eine zentrale Einheit geleitet wird und diese den Synchronisationswunsch an den wenigstens einen weiteren Prozessor weiterleitet.

14. Verfahren nach Anspruch 1, **dadurch gekennzeichnet, dass** die Synchronisation durch Mitteilung des Umschaltwunsches erfolgt und der Prozessor **dadurch** an eine vorgegeben Programmadresse springt.

15. Verfahren nach Anspruch 2, **dadurch gekennzeichnet, dass** der eine Prozessor solange angehalten wird bis der andere eine Tasks abgearbeitet hat und dann ebenfalls an der gleichen Programmstelle angelangt ist.

16. Mehrprozessorsystem mit wenigstens zwei Prozessoren und Mitteln zu deren Synchronisierung und Desynchronisierung, wobei Umschaltmittel enthalten sind, durch welche zwischen wenigstens zwei Betriebsmodi umgeschalten werden kann, wobei in einem ersten Betriebsmodus, in dem die Processoren redundant die gleichen Programme abarbeiten die wenigstens zwei Prozessoren synchronisiert sind und in einem zweiten Betriebsmodus die wenigstens zwei Prozessoren unterschiedliche Tasks ausführen und desynchronisiert sind, **dadurch gekennzeichnet, dass** das Mehrprozessorsystem derart Konfigariert ist, dass für den Übergang vom synchronisierten zum desychronisierten Betriebsmodus zur Desynchronisierung die beiden Prozessoren aufgrund einer Kennung (ID), die für jeden Prozessor in dem Mehrprozessorsystem einzigartig ist, an verschiedene Programmstellen springen und somit desychronisiert werden.

17. Mehrprozessorsystem nach Anspruch 16, **dadurch gekennzeichnet, dass** der erste Betriebsmodus einem Sicherheitsmodus entspricht und Vergleichsmittel vorgesehen sind, welche die bei der Abarbeitung der gleichen Programme entstehenden Zustände auf Übereinstimmung vergleichen.

18. Mehrprozessorsystem nach Anspruch 16, **dadurch gekennzeichnet, dass** das Mehrprozessorsystem derart ausgestaltet sind, dass eine Synchronisierung durch ein Anhaltesignal durchgeführt wird, welches einen vorauseilenden Prozessor anhält um diesen mit dem wenigstens zweiten Prozessor zu synchronisieren.

19. Mehrprozessorsystem nach Anspruch 18, **dadurch gekennzeichnet, dass** das Mehrprozessorsystem derart ausgestaltet ist, dass als Anhaltesignal das Wait-Signal eines Prozessors verwendet wird.

20. Mehrprozessorsystem nach Anspruch 18, **dadurch gekennzeichnet, dass** das Mehrprozessorsystem derart ausgestaltet ist, dass als Anhaltesignal ein Interrupt-Signal ausgelöst wird.

21. Mehrprozessorsystem nach Anspruch 18, **dadurch gekennzeichnet, dass** das Mehrprozessorsystem derart ausgestaltet ist, dass der Prozessor für die Synchronisation durch ein Auslassen von Taktzyklen angehalten wird.

22. Mehrprozessorsystem nach Anspruch 18, **dadurch gekennzeichnet, dass** das Mehrprozessorsystem derart ausgestaltet ist, dass der Prozessor für die Synchronisation durch ein Abschalten eines Taktsignales angehalten wird.

23. Mehrprozessorsystem nach Anspruch 16, **dadurch gekennzeichnet, dass** das Mehrprozessorsystem derart ausgestaltet ist, dass der vorliegende Betriebsmodus durch ein Modus-signal angezeigt wird .

24. Mehrprozessorsystem nach Anspruch 23, **dadurch gekennzeichnet, dass** das Mehrprozessorsystem derart ausgestaltet ist, dass das Modussignal als codiertes Signal, insbesondere als Dual-Rail-Signal, vorliegt.

25. Mehrprozessorsystem nach Anspruch 23, **dadurch gekennzeichnet, dass** das Mehrprozessorsystem derart ausgestaltet ist, dass das Modussignal redundant erzeugt wird, insbesondere durch zwei Zustandsautomaten oder durch eine Dual-Rail-Logik.

26. Mehrprozessorsystem nach Anspruch 16, **dadurch gekennzeichnet, dass** eine zentrale Einheit vorgesehen ist und das Mehrprozessorsystem derart ausgestaltet ist, dass ein Synchronisationswunsch an eine zentrale Einheit geleitet wird und diese den Synchronisationswunsch an den wenigstens einen weiteren Prozessor weiterleitet.

27. Mehrprozessorsystem nach Anspruch 18, **dadurch gekennzeichnet, dass** das Mehrprozessorsystem derart ausgestaltet ist, dass der eine Prozessor solange angehalten wird bis der wenigstens zweite Prozessor eine Tasks abgearbeitet hat und dann ebenfalls an der gleichen Programmstelle angelangt ist.

28. Mehrprozessorsystem nach Anspruch 16, **dadurch gekennzeichnet, dass** ein Prozessorregister vorgesehen ist und die Kennung in dem Prozessorregister abgelegt ist.

29. Mehrprozessorsystem nach Anspruch 16, **dadurch gekennzeichnet, dass** die Kennung extern zu den Prozessoren abgelegt ist, insbesondere in einer zentralen Einheit (DramCtrl).

30. Mehrprozessorsystem nach Anspruch 16, **dadurch gekennzeichnet, dass** das Umschaltmittel zur Umschaltung des Betriebsmodus fehlertolerant ausgelegt ist, insbesondere durch Duplizieren von Zustandsautomaten oder Implementierung in Dual-Rail Logik.

## Claims

1. Method for synchronization and desynchronization in a multiprocessor system having at least two processors, wherein changeover means are included which allow changeover between at least two modes of operation, the at least two processors being in sync in a first mode of operation, in which the processors redundantly execute the same programs, and the at least two processors executing different tasks and being out of sync in a second mode of operation, **characterized in that** for the transition from the synchronized to the desynchronized mode of operation, desynchronization is achieved by virtue of the two processors taking an identifier (ID), which is unique for each processor in the multiprocessor system, as a basis for jumping to different program points and hence being desynchronized.

2. Method according to Claim 1, **characterized in that** synchronization is initiated by a synchronization request, the synchronization request being able to be made by one or more processors, and the synchronization being performed by a stop signal which stops a leading processor in order to synchronize it with the at least second processor.

3. Method according to Claim 2, **characterized in that** the stop signal used is the wait signal from a processor.

4. Method according to Claim 2, **characterized in that** the stop signal initiated is an interrupt signal.

5. Method according to Claim 2, **characterized in that** the processor is stopped for the synchronization by omission of clock cycles.

6. Method according to Claim 2, **characterized in that** the processor is stopped for the synchronization by disconnection of a clock signal.

7. Method according to Claim 1, **characterized in that** the changeover is portrayed by a changeover request, and the changeover request is initiated by a signal.

8. Method according to Claim 1, **characterized in that** the changeover is portrayed by a changeover request, the changeover taking place only when the changeover request is made by two or more processors.

9. Method according to Claim 1, **characterized in that** the changeover is initiated by a changeover request, and after a changeover request the mode of operation of the multiprocessor system is changed and the changeover request is indicated by a signal.

10. Method according to Claim 1, **characterized in that** the present mode of operation is indicated by a mode signal.

11. Method according to Claim 10, **characterized in that** the mode signal is in the form of a coded signal, particularly in the form of a dual-rail signal.

12. Method according to Claim 10, **characterized in that** the mode signal is produced in redundant form, particularly by two state machines or by a piece of dual-rail logic.

13. Method according to Claim 1, **characterized in that** a synchronization request is routed to a central unit, and said central unit forwards the synchronization request to the at least one further processor.

14. Method according to Claim 1, **characterized in that** the synchronization is performed by conveying the changeover request, and the processor thereby jumps to a prescribed program address.

15. Method according to Claim 2, **characterized in that** one processor is stopped until the other has executed a task and has then likewise reached the same program point.

16. Multiprocessor system having at least two processors and means for synchronizing and desynchronizing them, wherein changeover means are included which allow changeover between at least two modes of operation, the at least two processors being in sync in a first mode of operation, in which the processors redundantly execute the same programs, and the at least two processors executing different tasks and being out of sync in a second mode of operation, **characterized in that** the multiprocessor system is configured such that for the transition from the synchronized to the desynchronized mode of operation, desynchronization is achieved by virtue of the two processors taking an identifier (ID), which is unique for each processor in the multiprocessor system, as a basis for jumping to different program points and hence being desynchronized.

17. Multiprocessor system according to Claim 16, **characterized in that** the first mode of operation corresponds to a safety mode, and comparison means are provided which compare the states produced when the same programs are executed for a match.

18. Multiprocessor system according to Claim 16, **characterized in that** the multiprocessor system is in a form such that synchronization is performed by a stop signal which stops a leading processor in order to synchronize it with the at least second processor.

19. Multiprocessor system according to Claim 15, **characterized in that** the multiprocessor system is in a form such that the stop signal used is the wait signal from a processor.

20. Multiprocessor system according to Claim 18, **characterized in that** the multiprocessor system is in a form such that the stop signal initiated is an interrupt signal.

21. Multiprocessor system according to Claim 18, **characterized in that** the multiprocessor system is in a form such that the processor is stopped for the synchronization by omission of clock cycles.

22. Multiprocessor system according to Claim 18, **characterized in that** the multiprocessor system is in a form such that the processor is stopped for the synchronization by disconnection of a clock signal.

23. Multiprocessor system according to Claim 16, **characterized in that** the multiprocessor system is in a form such that the present mode of operation is indicated by a mode signal.

24. Multiprocessor system according to Claim 23, **characterized in that** the multiprocessor system is in a form such that the mode signal is in the form of a coded signal, particularly in the form of a dual-rail signal.

25. Multiprocessor system according to Claim 23, **characterized in that** the multiprocessor system is in a form such that the mode signal is produced in redundant form, particularly by two state machines or by a piece of dual-rail logic.

26. Multiprocessor system according to Claim 16, **characterized in that** a central unit is provided and the multiprocessor system is in a form such that a synchronization request is routed to a central unit and said central unit forwards the synchronization request to the at least one further processor.

27. Multiprocessor system according to Claim 18, **characterized in that** the multiprocessor system is in a form such that one processor is stopped until the at least second processor has executed a task and has then likewise reached the same program point.

28. Multiprocessor system according to Claim 16, **characterized in that** a processor register is provided and the identifier is stored in the processor register.

29. Multiprocessor system according to Claim 16, **characterized in that** the identifier is stored externally with respect to the processors, particularly in a central unit (DramCtrl).

30. Multiprocessor system according to Claim 16, **characterized in that** the changeover means is designed to change over the mode of operation in error-tolerant fashion, particularly by duplication of state machines or implementation in dual-rail logic.

## Revendications

1. Procédé de synchronisation et de désynchronisation d'un système multiprocesseur comportant au moins deux processeurs, avec des moyens de commutation permettant de commuter entre au moins deux modes de fonctionnement,
dans un premier mode de fonctionnement dans lequel les processeurs traitent de façon redondante les mêmes programmes, on synchronise au moins les deux processeurs, et dans un second mode de fonctionnement, on désynchronise les deux processeurs qui exécutent des tâches différentes,
**caractérisé en ce que**
pour le passage du mode de fonctionnement synchronisé au mode de fonctionnement désynchronisé, pour désynchroniser les deux processeurs sur la base d'une caractéristique (ID), unique pour chacun des processeurs dans le système multiprocesseur, on passe à différents emplacements de programme et ainsi on désynchronise.

2. Procédé selon la revendication 1,
**caractérisé en ce qu'**
on déclenche une synchronisation par une demande de synchronisation, la demande de synchronisation étant réalisée par un ou plusieurs processeurs, et la synchronisation est effectuée en fonction d'un signal d'arrêt contenu dans un processeur en amont pour le synchroniser avec au moins le second processeur.

3. Procédé selon la revendication 2,
**caractérisé en ce que**
comme signal d'arrêt, on utilise le signal d'attente d'un processeur.

4. Procédé selon la revendication 2,
**caractérisé en ce que**
comme signal d'arrêt, on déclenche un signal d'interruption.

5. Procédé selon la revendication 2,
**caractérisé en ce que**
le processeur est arrêté pour la synchronisation par un déclenchement de cycles de cadence.

6. Procédé selon la revendication 2,
**caractérisé en ce qu'**
on arrête le processeur pour la synchronisation en coupant le signal de cadence.

7. Procédé selon la revendication 1,
**caractérisé en ce que**
la commutation est représentée par une demande de commutation et cette demande de commutation est déclenchée par un signal.

8. Procédé selon la revendication 1,
**caractérisé en ce que**
la commutation est représentée par une demande de commutation et la commutation ne se fait que si la demande (souhait) de commutation est demandée par deux ou plusieurs processeurs.

9. Procédé selon la revendication 1,
**caractérisé en ce que**
la commutation est déclenchée par une demande de commutation et après une demande de commutation, on modifie le mode de fonctionnement du système multiprocesseur et on affiche le souhait de commutation par un signal.

10. Procédé selon la revendication 1,
**caractérisé en ce que**
le mode de fonctionnement peut être affiché par un signal de mode.

11. Procédé selon la revendication 10,
**caractérisé en ce que**
le signal de mode est un signal codé, notamment un signal de rail double (dual-rail).

12. Procédé selon la revendication 10,
**caractérisé en ce que**
le signal de mode est généré de manière redondante, notamment par deux automates d'état ou par une logique de rail double.

13. Procédé selon la revendication 1,
**caractérisé en ce qu'**
une demande de synchronisation est transmise à une unité centrale et celle-ci transmet la demande de synchronisation vers au moins un autre processeur.

14. Procédé selon la revendication 1,
**caractérisé en ce que**
la synchronisation se fait par communication de la demande de commutation et ainsi le processeur passe à une adresse de programme prédéfinie.

15. Procédé selon la revendication 2,
**caractérisé en ce qu'**
un des processeurs est arrêté jusqu'à ce que l'autre ait traité un travail et ensuite on arrive également au même point de programme.

16. Synchronisation et désynchronisation de système multiprocesseur ayant au moins deux processeurs et des moyens, des moyens de commutation étant prévus qui permettent de commuter entre au moins deux modes de fonctionnement,
dans un premier mode de fonctionnement dans lequel les processeurs traitent de façon redondante les mêmes programmes, on synchronise au moins les deux processeurs et dans un second mode de fonctionnement dans lequel au moins deux processeurs exécutent des tâches différentes, on les désynchronise,
**caractérisée en ce que**
le système multiprocesseur est configuré de façon que pour le passage du mode de fonctionnement synchronisé au mode de fonctionnement désynchronisé, pour désynchroniser les deux processeurs à l'aide d'une caractéristique (ID), unique pour chaque processeur dans le système multiprocesseur, pour sauter à des points de programme effectifs et être ainsi désynchronisé.

17. Système multiprocesseur selon la revendication 16,
**caractérisé en ce que**
le premier mode de fonctionnement correspond à un mode de sécurité et des moyens de comparaison sont prévus qui comparent en concordance des états développés par le traitement des mêmes programmes.

18. Système multiprocesseur selon la revendication 16,
**caractérisé en ce que**
le système multiprocesseur est conçu pour effectuer une synchronisation par un signal d'arrêt qui arrête un processeur en avance pour le synchroniser au moins avec le second processeur.

19. Système multiprocesseur selon la revendication 18,
**caractérisé en ce que**
le système multiprocesseur est conçu pour utiliser comme signal d'arrêt le signal d'attente d'un processeur.

20. Système multiprocesseur selon la revendication 18,
**caractérisé en ce qu'**
il est formé pour déclencher, un signal d'interruption comme signal d'arrêt

21. Système multiprocesseur selon la revendication 18,
**caractérisé en ce que**
le système multiprocesseur est conçu pour que le processeur puisse être arrêté en vue de la synchronisation par une suppression de cycles de travail.

22. Système multiprocesseur selon la revendication 18,
**caractérisé en ce qu'**
il est réalisé pour que le processeur de synchronisation soit arrêté par un signal de synchronisation d'un signal d'horloge.

23. Système multiprocesseur selon la revendication 16,
**caractérisé en ce que**
le système multiprocesseur est réalisé pour indiquer le mode de fonctionnement présent par un signal de mode.

24. Système multiprocesseur selon la revendication 23,
**caractérisé en ce qu'**
il est réalisé pour que le signal de mode soit sous forme de signal de mode comme signal codé notamment comme signal de rail double.

25. Système multiprocesseur selon la revendication 23,
**caractérisé en ce qu'**
au départ il est réalisé pour que le signal de modulation apparaisse de façon redondante, notamment par deux automates d'état ou par une rampe logique.

26. Système multiprocesseur selon la revendication 16,
**caractérisé en ce qu'**
il comporte une unité centrale réalisée de façon à former une demande de synchronisation à une unité centrale et la demande de synchronisation est transmise à au moins un autre processeur.

27. Système multiprocesseur selon la revendication 18,
**caractérisé en ce que**
le système multiprocesseur est réalisé pour arrêter un processeur jusqu'à ce qu'au moins deux processeurs puissent traiter la même tâche et ensuite arriver au même emplacement de programme.

28. Système multiprocesseur selon la revendication 16,
**caractérisé par**
un registre de processeur et la caractéristique est déposée dans le registre de processeur.

29. Système multiprocesseur selon la revendication 16,
**caractérisé en ce que**
la caractéristique est enregistrée de façon externe au processeur, notamment dans une unité centrale (DramCtrl).

30. Système multiprocesseur selon la revendication 16,
**caractérisé en ce que**
le moyen de commutation pour commuter le mode de fonctionnement est tolérant pour les erreurs notamment par la duplication des automates d'état ou leur implantation en logique rail double.
